**Europäisches Patentamt**

**European Patent Office**

**Office européen des brevets**

(19)

(11) Numéro de publication: **0 054 493**
**B1**

(12)

# FASCICULE DE BREVET EUROPEEN

(45) Date de publication du fascicule du brevet:
27.02.85

(51) Int. Cl.⁴: **B 60 R 19/02,** B 60 R 19/18,
F 16 F 1/36

(21) Numéro de dépôt: **81401993.1**

(22) Date de dépôt: **14.12.81**

(54) **Absorbeur d'énergie utilisable en particulier comme pare-chocs de véhicule automobile.**

(30) Priorité: **15.12.80 FR 8026852**

(43) Date de publication de la demande:
**23.06.82 Bulletin 82/25**

(45) Mention de la délivrance du brevet:
**27.02.85 Bulletin 85/9**

(84) Etats contractants désignés:
**DE GB IT**

(56) Documents cités:
**DE - A - 2 319 957**
**DE - B - 1 275 892**
**FR - A - 1 430 309**
**FR - A - 1 440 514**
**FR - A - 1 456 507**
**FR - A - 1 478 774**
**FR - A - 2 119 354**
**FR - A - 2 339 784**
**FR - A - 2 361 247**
**FR - A - 2 368 648**
**US - A - 2 917 264**
**US - A - 3 741 598**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Gardou, Guy René, 14, rue de Chateaufort,
F-91400 Orsay (FR)**

(74) Mandataire: **Boivin, Claude, 9, rue Edouard-Charton,
F-78000 Versailles (FR)**

ACTORUM AG

## Description

La présente invention concerne les dispositifs absorbeurs d'énergie constitués par une poutre tubulaire nervurée, en une matière présentant une certaine élasticité, par exemple en matière plastique.

Les dispositifs absorbeurs d'énergie, notamment ceux destinés à pallier les effets de collisions de véhicules automobiles, doivent à la fois être relativement compacts et pouvoir être soumis à des efforts importants dans des conditions d'emploi contraignantes. Les dispositifs réalisés jusqu'à présent restent imparfaits, étant loin d'atteindre le niveau souhaitable.

Il est connu, par les brevets français Nos 1430309 et 2361247, des pare-chocs qui sont constitués par des poutres tubulaires nervurées, en une matière ayant une certaine élasticité et qui présentent une rigidité progressive.

Par ailleurs, la demande de brevet allemand publiée No 2319957 a pour objet un palier élastique qui comporte un évidement central de section transversale fermée, en forme de diabolo, délimité par deux voiles convergents, à convexité opposée, et deux cavités latérales symétriques disposées de part et d'autre du col de l'évidement central. La rigidité de ce palier augmente lorsque les deux parois du col de l'évidement central viennent au contact l'une de l'autre.

La présente invention a pour objet un dispositif absorbeur d'énergie constitué par une poutre tubulaire nervurée, en une matière présentant une certaine élasticité dont la section est du type de celle du palier connu, mais dont les performances sont très améliorées.

Cet absorbeur d'énergie est caractérisé en ce que chacune des cavités latérales débouche à l'extérieur de la poutre par une ouverture de largeur inférieure à la largeur maximale de la cavité, de manière à former des retombées, et déterminée de façon que les deux parois du col de l'évidement central viennent au contact l'une de l'autre avant que les retombées opposées ne se rencontrent.

Quand un effort est exercé au niveau d'une des deux faces de la poutre, autre que celles dans lesquelles débouchent les cavités latérales, la section de cette poutre se déforme et la largeur du col diminue. Dans cette phase de déformation, la souplesse de la poutre est relativement grande. Puis, lorsque les deux parois du col sont venues au contact l'une de l'autre, l'arc-boutement qui en résulte entraîne une augmentation de la rigidité de la poutre.

Dans une deuxième phase de la déformation de la poutre, les voiles arc-boutés l'un sur l'autre dans leur zone de contact travaillent au flambage et les cavités latérales se resserrent. La largeur des ouvertures diminue et leurs retombées finissent par se rencontrer. La section de la poutre devient alors pratiquement indéformable. La poutre présente alors une très grande rigidité.

La partie médiane des voiles peut comporter un insert de renfort.

L'absorbeur d'énergie selon l'invention est particulièrement utilisable comme pare-chocs de véhicule automobile. Lorsque, par suite d'un impact, la section du pare-chocs s'est déformée jusqu'à ce que les retombées des ouvertures latérales se soient rencontrées, le pare-chocs peut continuer à absorber de l'énergie par flexion entre ses appuis. Par ailleurs, si un impact se produit au droit d'un appui du pare-chocs, celui-ci ne peut fléchir; mais l'énergie de l'impact est absorbée par la déformation de la section du pare-chocs.

On a décrit ci-après, à titre d'exemple non limitatif, un mode de réalisation d'un pare-chocs de véhicule automobile réalisé selon l'invention, avec référence au dessin annexé dans lequel:

la fig. 1 est une vue en plan du pare-chocs monté sur un véhicule;

la fig. 2 en est une vue en coupe transversale, à plus grande échelle, suivant II-II de la fig. 1;

les fig. 3 et 4 sont des vues semblables à la fig. 2, mais illustrant les phases de déformation successives de la section du pare-chocs, lors d'un impact;

la fig. 5 est un diagramme montrant le déplacement de la face extérieure du pare-chocs en fonction de la force appliquée.

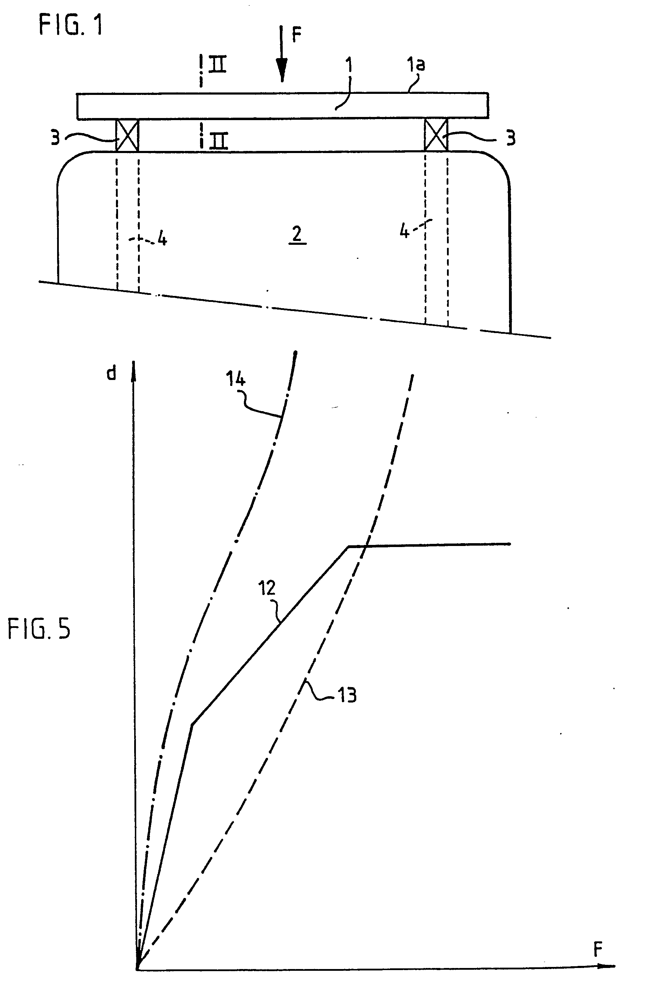

A la fig. 1, on voit en 1 un pare-chocs qui est fixé à l'avant ou à l'arrière de la carrosserie 2 d'un véhicule automobile, par l'intermédiaire de supports 3, au droit des longerons 4 du véhicule.

Le pare-chocs 1 est constitué par une poutre tubulaire en caoutchouc ou en matière plastique dont le contour général extérieur est sensiblement rectangulaire. Cette poutre présente un évidement central 5, de section fermée en forme de diabolo, à col arrondi, dont l'axe est perpendiculaire aux faces 1a et 1b de la poutre, celles-ci étant respectivement la face extérieure du pare-chocs et sa face fixée aux supports 3.

De part et d'autre du col 6 de l'évidement 5 sont ménagées deux cavités latérales symétriques 7 qui débouchent à l'extérieur par l'intermédiaire d'ouvertures 8 prévues sur les deux autres faces 1c et 1d de la poutre 1. Les voiles convergents 9, à convexité opposée, qui séparent l'évidement central 5 des cavités latérales 7, ont une épaisseur constante, de sorte que les cavités 7 ont une section sensiblement triangulaire. Chacune des ouvertures 8 a une largeur supérieure à la largeur du col 6; elle est inférieure à la largeur maximale des cavités 7, de manière à former des retombées opposées 10 et 10'.

Les voiles 9 sont renforcés par un mat en fibres de verre 11 dans leur partie médiane avoisinant le col 6 de l'évidement central 5.

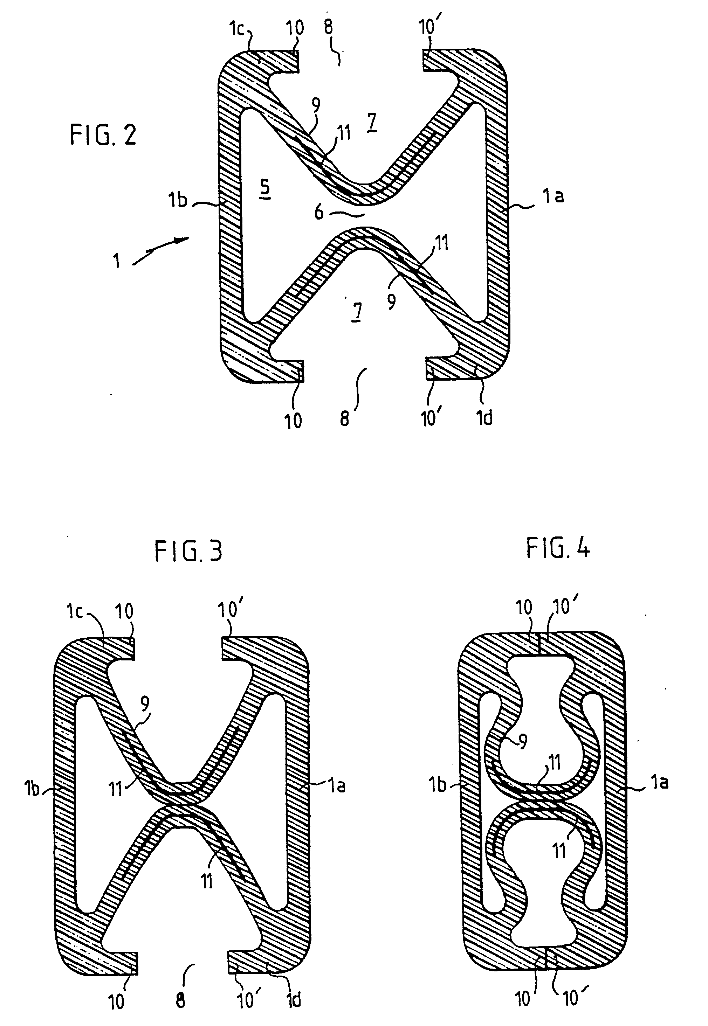

Lorsqu'un effort F est exercé sur la face 1a, la face 1b étant supposée fixe, la poutre se déforme facilement en présentant une élasticité d'amortissement importante, jusqu'à ce que les voiles 9 soient venus au contact l'un de l'autre, au niveau du col 6 (fig. 3). Si l'effort augmente encore, les voiles 9 arc-boutés l'un sur l'autre travaillent au flambage jusqu'à ce que chacune des retombées 10 vienne au contact de la retombée 10' qui lui fait face (fig. 4); pendant cette phase de déformation, l'élasticité de la poutre est beaucoup plus faible.

Quand les retombées 10 et 10' sont en contact, la section de la poutre devient très rigide.

La courbe 12 de la fig. 5 montre, en fonction de l'effort F, le déplacement d de la face 1a du pare-chocs qui résulte de la déformation de la section de la poutre.

En même temps que la section du pare-chocs se déforme, celui-ci fléchit entre ses appuis 3. La courbe 13 montre le déplacement de la face 1a du pare-chocs qui résulte de ce fléchissement, et la courbe 14 montre le déplacement total de cette face 1a. A partir du moment où les retombées 10 et 10' sont au contact, le pare-chocs ne travaille plus qu'en flexion pure entre ses appuis 3.

Il va de soi que la présente invention ne doit pas être considérée comme limitée au mode de réalisation décrit et représenté.

**Revendications**

1. Absorbeur d'énergie utilisable en particulier comme pare-chocs de véhicule et constitué par une poutre tubulaire nervurée (1), en une matière présentant une certaine élasticité, par exemple en matière plastique, dont la section comporte un évidement central (5) de section transversale fermée, en forme de diabolo, délimité par deux voiles convergents (9), à convexités opposées, et deux cavités latérales symétriques (7) disposées de part et d'autre du col (6) de l'évidement central (5), caractérisé en ce que chacune des cavités latérales (7) débouche à l'extérieur de la poutre (1) par une ouverture (8) de largeur inférieure à la largeur maximale de la cavité (7) de manière à former des retombées (10 et 10') et déterminée de façon que les deux parois du col (6) de l'évidement central (5) viennent au contact l'une de l'autre avant que les retombées opposées (10 et 10') ne se rencontrent.

2. Absorbeur d'énergie selon la revendication 1, caractérisé en ce que la partie médiane des voiles comporte un insert de renfort.

3. Absorbeur selon la revendication 2, caractérisé en ce que l'insert de renfort est constitué par un mat en fibres de verre.

4. Absorbeur d'énergie selon l'une des revendications 1 à 3, caractérisé en ce que le contour général de la poutre est sensiblement rectangulaire.

**Claims**

1. Energy absorber, particularly for use as a motor vehicle bumper and formed by a ribbed tubular beam (1) made from a material having a certain resilience, for example from a plastic material, whose section comprises a central recess (5) having a closed cross section in the form of a diabolo defined by two convergent webs (9), with opposite convexities, and two symmetrical lateral cavities (7) disposed on each side of the neck (6) of the central recess (5), characterised in that each of the lateral cavities (7) opens to the outside of the beam (1) through an opening (8) of width less than the maximum width of the cavity (7) so as to form flanges (10 and 10') and determined so that the two walls of the neck (6) of the central recess (5) come into contact with one another before the opposite flanges (10 and 10') meet.

2. Energy absorber according to Claim 1, characterised in that the median part of the webs comprises a reinforcing insert.

3. Absorber according to Claim 2, characterised in that the reinforcing insert is formed by a glass fiber mat.

4. Energy absorber according to one of Claims 1 to 3, characterised in that the general contour of the beam is substantially rectangular.

**Patentansprüche**

1. Energieaufnahmevorrichtung, insbesondere verwendbar als Kraftfahrzeugstossstange, die als gerippter rohrförmiger Träger (1) ausgebildet ist, der aus einem eine gewisse Elastizität aufweisenden Material, beispielsweise aus Kunststoff, besteht und im Schnitt eine zentrale Aussparung (5) mit geschlossenem Querschnitt in Form eines Diabolo aufweist, die von zwei konvergierenden Trennwänden (9) mit entgegengesetzter Krümmung begrenzt ist, sowie zwei symmetrische seitliche Hohlräume (7), die zu beiden Seiten des Halses (6) der zentralen Aussparung (5) angeordnet sind, dadurch gekennzeichnet, dass jeder der seitlichen Hohlräume (7) in den Aussenraum des Trägers (1) über eine Öffnung (8) einmündet, deren Breite kleiner ist als die maximale Breite des Hohlraumes (7), so dass Randstege (10 und 10') gebildet werden, und die derart ausgebildet ist, dass die beiden Wände des Halses (6) der zentralen Aussparung (5) miteinander in Kontakt kommen, bevor die einander gegenüberliegenden Randstege (10 und 10') aufeinanderstossen.

2. Energieaufnahmevorrichtung nach Anspruch 1, dadurch gekennzeichnet, dass die Mittelpartie der Trennwände eine Verstärkungseinlage aufweist.

3. Energieaufnahmevorrichtung nach Anspruch 2, dadurch gekennzeichnet, dass die Verstärkungseinlage durch eine Glasfasermatte gebildet wird.

4. Energieaufnahmevorrichtung nach einem der Ansprüche 1 bis 3, dadurch gekennzeichnet, dass der allgemeine Umriss des Trägers im wesentlichen rechteckig ist.

FIG. 1

F

II

1

1a

3

3

II

4

2

4

d

14

FIG. 5

12

13

F

0 054 493

FIG. 2

FIG. 3

FIG. 4

7